# EUROPEAN PATENT SPECIFICATION

(11) **EP 2 140 325 B1**
(45) Date of publication and mention of the grant of the patent: **25.05.2011**
(21) Application number: 08746287.5
(22) Date of filing: 18.04.2008
(51) Int. Cl.: G05D 16/06

(54) **ADJUSTABLE DISC MECHANISM FOR GAS REGULATOR**
EINSTELLBARER SCHEIBENMECHANISMUS FÜR EINEN GASREGULATOR
MÉCANISME DE DISQUE RÉGLABLE POUR RÉGULATEUR À GAZ

(30) Priority: 20.04.2007 US 913109 P
(43) Date of publication of application: 06.01.2010
(73) Proprietor: Fisher Controls International LLC, St. Louis, MO 63136 (US)
(72) Inventor: HAWKINS, James, Chester, Allen, TX 75002 (US)
(74) Representative: Bohnenberger, Johannes
(86) International application number: PCT/US2008/060842
(87) International publication number: WO 2008/131235

(56) References cited:
- US-A- 2 869 575
- US-A- 4 754 778
- US-A- 4 889 158

## Description

### CROSS-REFERENCE TO RELATED APPLICATIONS

The priority benefit of U.S. Provisional Patent Application No. 60/913,109, entitled "Adjustable Disc Mechanism for Gas Regulator," filed April 20, 2007, is claimed.

### FIELD OF THE INVENTION

present invention relates to gas regulators, and more particularly, to gas regulators having actuators with closed-loop control.

### BACKGROUND

The pressure at which typical gas distribution systems supply gas may vary according to the demands placed on the system, the climate, the source of supply, and/or other factors. However, most end-user facilities equipped with gas appliances such as furnaces, ovens, etc., require the gas to be delivered in accordance with a predetermined pressure, and at or below a maximum capacity of the gas regulator. Therefore, gas regulators are implemented into these distribution systems to ensure that the delivered gas meets the requirements of the end-user facilities. Conventional gas regulators generally include a closed-loop control actuator for sensing and controlling the pressure of the delivered gas. D1= US 2 869 575 discloses a fluid regulating device according to the preamble of claim 1.

In addition to a closed loop control, some conventional gas regulators include a relief valve. The relief valve is adapted to provide overpressure protection when the regulator or some other component of the fluid distribution system fails, for example. Accordingly, in the event the delivery pressure rises above a predetermined threshold pressure, the relief valve opens to exhaust at least a portion of the gas to the atmosphere, thereby reducing the pressure in the system.

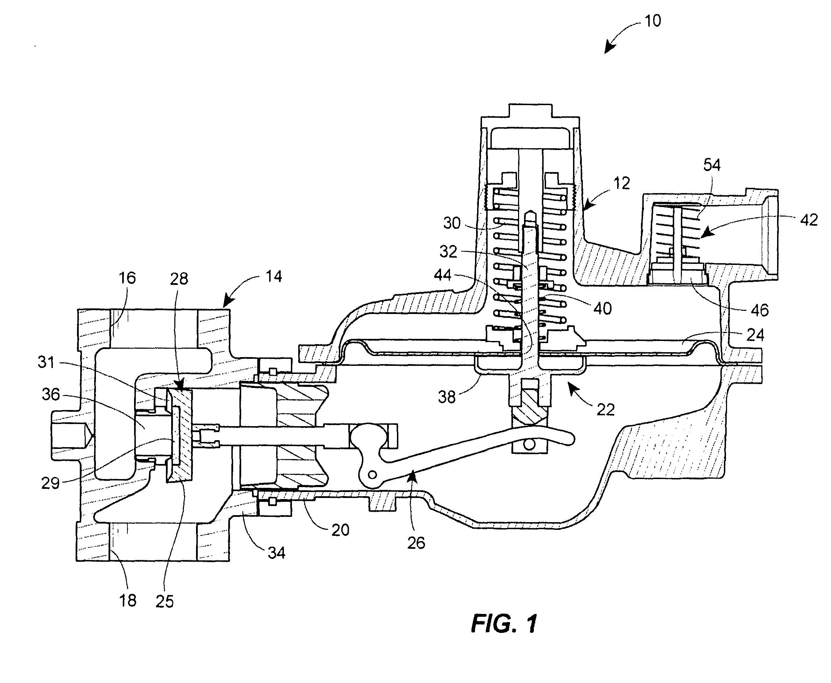

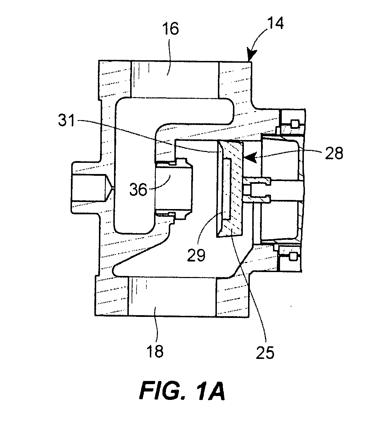

FIGS. 1 and 1A depict one conventional gas regulator 10. The regulator 10 generally comprises an actuator 12 and a regulator valve 14. The regulator valve 14 defines an inlet 16 for receiving gas from a gas distribution system, for example, and an outlet 18 for delivering gas to an end-user facility such as a factory, a restaurant, an apartment building, etc. having one or more appliances, for example. Additionally, the regulator valve 14 includes a valve port 36 disposed between the inlet and the outlet. Gas must pass through the valve port 36 to travel between the inlet 16 and the outlet 18 of the regulator valve 14.

The actuator 12 is coupled to the regulator valve 14 to ensure that the pressure at the outlet 18 of the regulator valve 14, i.e., the outlet pressure, is in accordance with a desired outlet or control pressure. The actuator 12 is therefore in fluid communication with the regulator valve 14 via a valve mouth 34 and an actuator mouth 20. The actuator 12 includes a control assembly 22 for sensing and regulating the outlet pressure of the regulator valve 14. Specifically, the control assembly 22 includes a diaphragm 24, a piston 32, and a control arm 26 having a valve disc 28. The conventional valve disc 28 includes a generally cylindrical body 25 and a sealing insert 29 fixed to the body 25. The valve body 25 may also include a circumferential flange 31 integrally formed therewith, as depicted in FIG. 1A. The diaphragm 24 senses the outlet pressure of the regulator valve 14. The control assembly 22 further includes a control spring 30 in engagement with a top-side of the diaphragm 24 to offset the sensed outlet pressure. Accordingly, the desired outlet pressure, which may also be referred to as the control pressure, is set by the selection of the control spring 30.

The diaphragm 24 is operably coupled to the control arm 26, and therefore the valve disc 28, via the piston 32 to control the opening of the regulator valve 14 based on the sensed outlet pressure. For example, when an end user operates an appliance, such as a furnace, for example, that places a demand on the gas distribution system downstream of the regulator 10, the outlet flow increases, thereby decreasing the outlet pressure. Accordingly, the diaphragm 24 senses this decreased outlet pressure. This allows the control spring 30 to expand and move the piston 32 and the right-side of the control arm 26 downward, relative to the orientation of FIG. 1. This displacement of the control arm 26 moves the valve disc 28 away from the valve port 36 to open the regulator valve 14. FIG. 1A depicts the valve disc 34 in a first or normal operational mode. So configured, the appliance may draw gas through the valve port 36 toward the outlet 18 of the regulator valve 14.

In the conventional regulator 10, the control spring 30 inherently generates less force as it expands towards an uncompressed length when displacing the control arm 26 to open the valve port 36. Additionally, as the control spring 30 expands, the diaphragm 24 deforms, which increases the area of the diaphragm 24. The decreased force supplied by the control spring 30 and the increased area of the diaphragm 24 in this operational scenario combine to create a regulator response wherein the force provided by the control spring cannot adequately balance the force generated by the diaphragm thereby resulting in an outlet control pressure that is less than that originally set by the user. This phenomenon is known as "droop." When "droop" occurs, the outlet pressure decreases below its set control pressure and the regulator 10 may not function as intended.

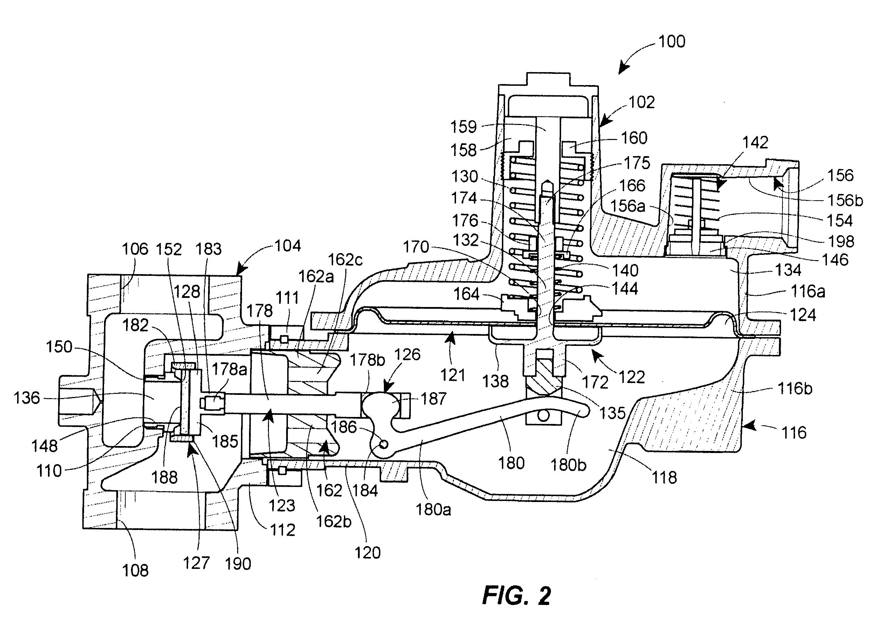

In the conventional regulator 10 depicted in FIG. 1, the control assembly 22 further functions as a relief valve, as mentioned above. Specifically, the control assembly 22 also includes a relief spring 40 and a release valve 42. The diaphragm 24 includes an opening 44 through a central portion thereof and the piston 32 includes a sealing cup 38. The relief spring 40 is disposed between the piston 32 and the diaphragm 24 to bias the diaphragm 24 against the sealing cup 38 to close the opening 44, during normal operation. Upon the occurrence of a failure such as a break in the control arm 26, the control assembly 22 is no longer in direct control of valve disc 28 and the valve disc 28 will move into an extreme open position by the inlet flow. This allows a maximum amount of gas to flow into the actuator 12. Thus, as the gas fills the actuator 12, pressure builds against the diaphragm 24 forcing the diaphragm 24 away from the sealing cup 38, thereby exposing the opening 44. The gas therefore flows through the opening 44 in the diaphragm 24 and toward the release valve 42. The release valve 42 includes a valve plug 46 and a release spring 54 biasing the valve plug 46 into a closed position, as depicted in FIG. 2. Upon the pressure within the actuator 12 and adjacent the release valve 42 reaching a predetermined threshold pressure, the valve plug 46 displaces upward against the bias of the release spring 54 and opens, thereby exhausting gas into the atmosphere and reducing the pressure in the regulator 10.

When selecting a regulator for use in a particular application, technicians are charged with the task of maximizing flow capacity at the set control pressure while minimizing the amount of gas exhausted to the atmosphere under failure conditions. Typically, this task is accomplished by designing or selecting various aspects of the regulator 10, such as the valve port, to afford some compromise between these competing interests. In order to limit the amount of gas released to the atmosphere by the relief valve, technicians often choose the smallest port available to meet the required flow capacity.

### SUMMARY

The present invention provides an adjustable control element and/or a regulator, or other fluid flow control or regulating device. In one embodiment, an adjustable regulator constructed according to the principles of the present invention can include a valve body, a valve port, a valve disc, a diaphragm, and a shroud. The valve body defines an inlet and an outlet. The valve port is carried by the valve body between the inlet and the outlet. The valve disc is disposed within the valve body and adapted for displacement between an open position and a closed position to control the flow of a fluid through the valve body.

Additionally, in one embodiment, the valve disc can have a sealing surface for engaging the valve port when the valve disc is in the closed position. The diaphragm can be operably connected to the valve disc for controlling the position of the valve disc. The shroud is carried by the valve disc and extends axially beyond the sealing surface of the valve disc such that the shroud directs the flow of fluid through the valve port toward the outlet of the valve body when the valve disc is in an open position.

In one embodiment, the shroud can be an adjustable shroud that is adapted for axial displacement between a plurality of positions relative to the valve disc, thereby enabling the regulator to be tuned to meet particular desires.

In an alternative embodiment, either or both of the shroud and the valve disc can include indicia for indicating the position of the adjustable shroud relative to the valve disc.

In one embodiment, the shroud can include a cylindrical shroud in threaded engagement with the valve disc. In one form, the shroud is in threaded engagement with a periphery of the valve disc. In another form, the shroud may be wholly removable from the valve disc.

In accordance with another or an alternative embodiment, the regulator additionally include a plurality of shrouds. For example, a regulator can include a first shroud and a second shroud. Each of the first and second shrouds can be adapted to be interchangeably disposed on the valve disc to define different operational characteristics for the regulator. For example, the first shroud may extend a first distance beyond the valve disc to provide a first flow characteristic, while the second shroud may extend a second distance beyond the valve to define a second, different characteristic.

### BRIEF DESCRIPTION OF THE DRAWINGS

FIG. 1 is a side cross-sectional view of a conventional regulator;

FIG. 1A is a side cross-sectional view of a regulator valve of the regulator of FIG. 1;

FIG. 2 is a side cross-sectional view of a regulator constructed in accordance with one embodiment of the present invention showing the valve disc in a closed position;

FIG. 3 is a side cross-sectional view of the regulator of FIG. 2 showing the valve disc in an operating position;

FIG. 4 is a partially exploded side cross-sectional view of the control element of the regulator of FIGS. 3 and 3A constructed in accordance with one embodiment of the present invention;

FIGS. 5A-5C are side cross-sectional views of the control element of FIGS. 3, 3A, and 4 configured in accordance with first, second, and third arrangements, respectively;

FIG. 6 is a side cross-sectional view of the regulator valve of FIG. 3 showing the control element in a full open operating position; and

FIGS. 7A-7C are side cross-sectional views of a control element constructed in accordance with an alternative embodiment of the present invention.

### DETAILED DESCRIPTION

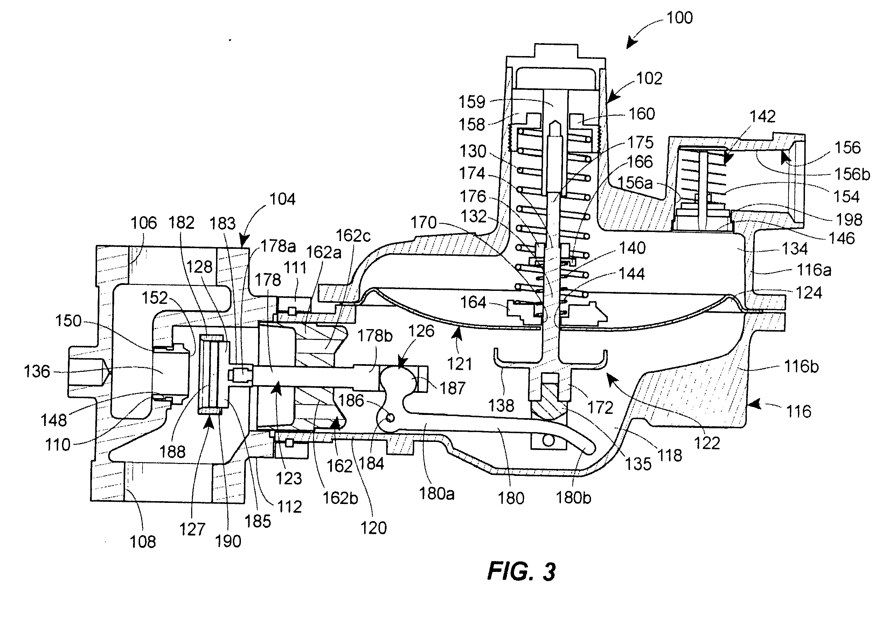

FIGS. 2 and 3 depict a gas regulator 100 constructed in accordance with one embodiment of the present invention. The gas regulator 100 generally comprises an actuator 102 and a regulator valve 104. The regulator valve 104 includes an inlet 106 for receiving gas from a gas distribution system, for example, and an outlet 108 for delivering gas to a facility having one or more appliances, for example. The actuator 102 is coupled to the regulator valve 104 and includes a control assembly 122 having a control element 127. During a first or normal operational mode, the control assembly 122 senses the pressure at the outlet 108 of the regulator valve 104, i.e., the outlet pressure, and controls a position of the control element 127 such that the outlet pressure approximately equals a predetermined control pressure. Additionally, upon the occurrence of a failure in the system, the regulator 100 performs a relief function that is generally similar to the relief function described above with reference to the regulator 10 depicted in FIGS. 1 and 1A.

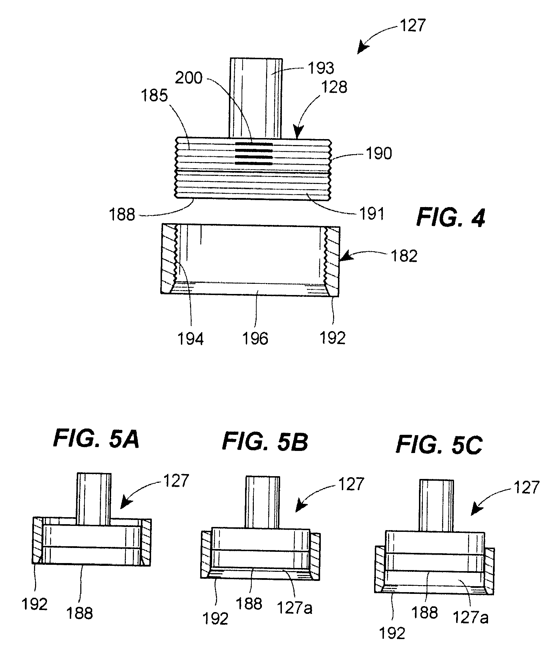

With continued reference to FIG. 2, the regulator valve 104 defines a throat 110 and a valve mouth 112. The throat 110 is disposed between the inlet 106 and the outlet 108. A valve port 136 is disposed in the throat 110 and defines a bore 148 having an inlet 150 and an outlet 152. Gas must travel through the bore 148 in the valve port 136 to travel between the inlet 106 and the outlet 108 of the regulator valve 104. The valve port 136 is removable from the regulator valve 104 such that it may be replaced with a different valve port having a bore of a different diameter or configuration to tailor operational and flow characteristics of the regulator valve 104 to a specific application. In the disclosed embodiment, the valve mouth 112 defines an opening 114 (shown in FIGS. 3A and 4) disposed along an axis that is generally perpendicular to an axis of the inlet 106 and outlet 108 of the regulator valve 104.

The actuator 102 includes a housing 116 and the control assembly 122, as mentioned above. The housing 116 includes an upper housing component 116a and a lower housing component 116b secured together with a plurality of fasteners, for example. The lower housing component 116b defines a control cavity 118 and an actuator mouth 120. The actuator mouth 120 is connected to the valve mouth 112 of the regulator valve 104 to provide fluid communication between the actuator 102 and the regulator valve 104. In the disclosed embodiment, the regulator 100 includes a collar 111 securing the mouths 112, 120 together. The upper housing component 116a defines a relief cavity 134 and an exhaust port 156. The upper housing component 116a further defines a tower portion 158 for accommodating a portion of the control assembly 122, as will be described.

The control assembly 122 includes a diaphragm subassembly 121, a disc subassembly 123, and a release valve 142. The diaphragm subassembly 121 includes a diaphragm 124, a piston 132, a control spring 130, a relief spring 140, a combination spring seat 164. a relief spring seat 166, a control spring seat 160, and a piston guide 159.

More particularly, the diaphragm 124 includes a disc-shaped diaphragm defining an opening 144 through a central portion thereof. The diaphragm 124 is constructed of a flexible, substantially air-tight, material and its periphery is sealingly secured between the upper and lower housing components 116a, 116b of the housing 116. The diaphragm 124 therefore separates the relief cavity 134 from the control cavity 118.

The combination spring seat 164 is disposed on top of the diaphragm 124 and defines an opening 170 disposed concentric with the opening 144 in the diaphragm 124. As depicted in FIG. 2, the combination spring seat 164 supports the control spring 130 and the relief spring 140.

The piston 132 of the disclosed embodiment includes a generally elongated rod-shaped member having a sealing cup portion 138, a yoke 172, a threaded portion 174, and a guide portion 175. The sealing cup portion 138 is concaved and generally disc-shaped and extends circumferentially about a mid-portion of the piston 132, and is located just below the diaphragm 124. The yoke 172 includes a cavity adapted to accommodate a coupler 135 which connects to a portion of the disc subassembly 123 to enable attachment between the diaphragm subassembly 121 and the disc subassembly 123, as will be described.

The guide portion 175 and the threaded portion 174 of the piston 132 are disposed through the openings 144, 170 in the diaphragm 124 and the combination spring seat 164, respectively. The guide portion 175 of the piston 132 is slidably disposed in a cavity in the piston guide 159, which maintains the axial alignment of the piston 132 relative to the remainder of the control assembly 122. The relief spring 140, the relief spring seat 166, and a nut 176, are disposed on the threaded portion 174 of the piston 132. The nut 176 retains the relief spring 140 between the combination spring seat 164 and the relief spring seat 166. The control spring 130 is disposed on top of the combination spring seat 164, as mentioned, and within the tower portion 158 of the upper housing component 116a. The control spring seat 160 is threaded into the tower portion 158 and compresses the control spring 130 against the combination spring seat 164. In the disclosed embodiment, the control spring 130 and the relief spring 140 include compression coil springs. Accordingly, the control spring 130 is grounded against the upper housing component 116a and applies a downward force to the combination spring seat 164 and the diaphragm 124. The relief spring 140 is grounded against the combination spring seat 164 and applies an upward force to the relief spring seat 166, which in turn is applied to the piston 132. In the disclosed embodiment, the force generated by the control spring 130 is adjustable by adjusting the position of the control spring seat 160 in the tower portion 158, and therefore the control pressure of the regulator 100 is also adjustable.

The control spring 130 acts against the pressure in the control cavity 118, which is sensed by the diaphragm 124. As stated, this pressure is the same pressure as that which exists at the outlet 108 of the regulator valve 104. Accordingly, the force applied by the control spring 130 sets the outlet pressure to a desired, or control pressure for the regulator 100. The diaphragm subassembly 121 is operably coupled to the disc subassembly 123, as mentioned above, via the yoke portion 172 of the piston 132 and the coupler 135.

Specifically, the disc subassembly 123 includes a control arm 126 and a stem guide 162. The control arm 126 includes a stem 178, a lever 180, and the control element 127. The control element 127 of the disclosed embodiment includes a valve disc 128 and a shroud 182. The stem 178, lever 180, and valve disc 128 are constructed separately and assembled to form the control ann 126. Specifically, the stem 178 is a generally linear rod having a nose 178a and a recess 178b, which in the disclosed embodiment is generally rectangular. The lever 180 is a slightly curved rod and includes a fulcrum end 180a and a free end 180b. The fulcrum end 180a includes an aperture 184 receiving a pivot pin 186 carried by the lower housing component 116b. The fulcrum end 180a also includes a knuckle 187 having an elliptical cross-section and disposed within the recess 178b of the stem 178. The free end 180b is received between a top portion 135a and a pin 135b of the coupler 135 that is attached to the yoke 172 of the piston 132. Thus, the coupler 135 operably connects the disc subassembly 123 to the diaphragm subassembly 121.

The stem guide 162 includes a generally cylindrical outer portion 162a, a generally cylindrical inner portion 162b, and a plurality of radial webs 162c connecting the inner and outer portions 162b, 162a. The outer portion 162a of the stem guide 162 is sized a configured to fit within the mouths 112, 120 of the regulator valve 104 and lower housing component 116b, respectively. The inner portion 162b is sized and configured to slidably retain the stem portion 178 of the control arm 126. Thus, the stem guide 162 serves to maintain the alignment of the regulator valve 104, the actuator housing 116, and the control assembly 122, and more particularly, the stem 178 of the control arm 126 of the control assembly 122.

With reference to FIG. 4, the valve disc 128 of the control element 127 includes a collar 193 and a generally cylindrical body 185. The collar 193 is adapted to snap-fit onto the nose 178a of the stem 178, as depicted in FIG. 2. The cylindrical body 185 has a circular sealing surface 188 and an outer surface 190. The cylindrical body 185 may also include a sealing component 191 attached thereto and carrying the sealing surface 188. The sealing component 191 may be attached to the remainder of the cylindrical body 185 with adhesive, for example, or some other means. The sealing component 191 may be constructed of the same material or a different material than remainder of the cylindrical body 185. For example, in one embodiment, the sealing component 191 may include a polymer sealing component 191.

With continued reference to FIG. 4, the shroud 182 includes a generally hollow cylindrical member, which can also be referred to as a collar, having a ringshaped end surface 192 and an inner surface 194. In one embodiment, the inner surface 194 of the shroud 182 includes a plurality of threads adapted for threaded engagement with a plurality of mating threads disposed on the outer surface 190 of the valve disc 128, as shown in FIG. 4, for example. Additionally, the shroud 182 may include a chamfered inner surface portion 196 disposed adjacent to the end surface 192. The chamfered inner surface portion 196 can also be referred to as a tapered cross-sectional portion comprising, at least in one embodiment, a frustoconical surface geometry, for example.

When assembled, the shroud 182 can be attached to the periphery of the valve disc 128 such that the end surface 192 can be disposed generally parallel to and offset from the sealing surface 188 of the valve disc 128. Thus, when assembled, the sealing surface 188 is recessed from the end surface 192 of the shroud 182, thereby defining a generally cylindrical cavity 127a (shown in FIGS. 5B and 5C, for example) in the control element 127 between the sealing surface 188 and the end surface 192. As stated, the disclosed embodiment of the control element 127 may include the shroud 182 threadably attached to the valve disc 128. This advantageously allows the axial position of the shroud 182 to be adjusted by rotating the shroud 182 relative to the valve disc 128. Such axial displacement allows the control element 127 to be tuned for specific applications, as will be described. In other embodiments, the shroud 182 can include a set screw (not shown) instead of threads such that the axial position of the shroud 182 may be fixed by tightening the set screw into the outer surface 190 of the valve disc 128. In still other embodiments, the shroud 182 can be threaded onto the valve disc 128 and additionally include a set screw. In still further embodiments, the shroud 182 and valve disc 128 may be connected by a knurled, keyed, or splined connection allowing for adjustment of the shroud 182 relative to the valve disc 128. Further still, one embodiment of the control element 127 may include indicia on either or both of the inner surface 194 of the shroud 182 and the outer surface 190 of the valve disc 128 such that the position of the shroud 182 relative to the valve disc 128 can be indicated. For example, the indicia may include scaled or graduated markings 200 on the outer surface 190 of the valve disc 128, such as those shown in FIG. 4.

FIG. 2 depicts the regulator 100 in a closed position, where there is no demand placed on the system downstream of the regulator 100. Therefore, the sealing surface 188 of the valve disc 128 sealingly engages the outlet 152 of the valve port 136. So configured, gas does not flow through the valve port 136 and the regulator valve 104. This configuration is achieved because the outlet pressure, which corresponds to the pressure in the control cavity 118 of the housing 116 and sensed by the diaphragm 124, is greater than the force applied by the control spring 130. Accordingly, the outlet pressure forces the diaphragm 124 and the piston 132 into the closed position.

However, in the event that an operating demand is placed on the gas distribution system, e.g., a user begins operating an appliance such as a furnace, a stove, etc., the appliance draws gas flow from the control cavity 118 of the regulator 100, thereby reducing the pressure that is sensed by the diaphragm 124. As the pressure sensed by the diaphragm 124 decreases, a force imbalance occurs between a control spring force and an outlet pressure force on the diaphragm 124 such that the control spring 130 expands and displaces the diaphragm 124 and piston 132 downward, relative to the housing 116. This causes the lever 180 to pivot in the clockwise direction about the pivot pin 186, which, in turn, rotates the knuckle 187 relative to the recess 178b in the stem 178. This moves the control element 127 away from the outlet 152 of the valve port 136 to open the regulator valve 104.

FIGS. 3 and 3A depict the diaphragm subassembly 121 including the control element 127 in one example of a normal operating position. So configured, the gas distribution system is able to deliver gas to the downstream appliance through the regulator valve 104 at a control pressure that is set by the control spring 130. Additionally, the diaphragm subassembly 121 continues to sense the outlet pressure of the regulator valve 104. As long as the outlet pressure remains approximately equal to the control pressure, the control assembly 122 will keep the control element 127 in this same general position. However, if the outlet flow, i.e., the demand, decreases, thereby increasing the outlet pressure above the control pressure set by the control spring 130, the diaphragm 124 senses the increased outlet pressure and moves upward against the bias of the control spring 130. Alternatively, if the outlet flow, i.e., the demand, increases, thereby decreasing the outlet pressure below the control pressure, the diaphragm senses the decreased outlet pressure and the spring 130 biases the diaphragm 124 and piston 132 downward to open the regulator valve 104. Thus, slight deviations from the outlet or control pressure causes the control assembly 122 to react and adjust the position of the control element 127.

As the control spring 130 expands to displace the control element 127 and open the valve port 136, the force it generates reduces and the area of the diaphragm 124 increases. In the conventional regulator 10 described above with reference to FIGS. 1 and 1A, this reduction in spring force and increased diaphragm area, reduces the amount of outlet pressure required to balance the diaphragm 24, thereby resulting in the diaphragm 24 sensing a pressure that is lower than the actual outlet pressure. This, in turn, causes the control assembly 22 to open the valve port 36 even further, which reduces the outlet pressure of the regulator valve 14 below the control pressure. As stated above, this phenomenon is known as "droop."

However, the control element 127 of the regulator 100 disclosed in accordance with this embodiment of the present invention includes the shroud 182 attached to the valve disc 128, which helps compensate for this "droop." The shroud 182 is adapted to selectively extend beyond the sealing surface 188 of the valve disc 128 such that when the control element 127 is in this first operating mode or condition, the shroud 182 can direct the flow of gas flowing from the valve port 136 away from the diaphragm 124 of the actuator 102 and toward the outlet 108 of the regulator valve 104, as will be described. So configured, it should be appreciated that the shroud 182 may artificially induce a lower pressure or false pressure registration at the diaphragm 124 due to the restriction presented by the shroud 182. The lower sensed pressure at the diaphragm 124 causes the control spring 130 to bias the diaphragm 124 downward, which will further open the valve port 136. This will increase the flow of gas through the valve 104 to the outlet 108 and increase the outlet control pressure. Accordingly, the control element 127 of the disclosed embodiment provides for a "boost" to compensate for the "droop" that would otherwise occur.

As described above, the shroud 182 of the disclosed embodiment is adjustably attached to the valve disc 128. Therefore, the control element 127 may be tuned, for example, for different applications by adjusting the axial position of the shroud 182 relative to the valve disc 128, which in turn adjusts the degree to which the shroud 182 extends beyond the sealing surface 188 and directs the flow of gas to the outlet 108 of the regulator valve 104.

For example, as depicted in FIGS. 5A-5C, the control element 127 of the disclosed embodiment may be adjustable between three configurations, for example. It should be appreciated that in the disclosed embodiment, where the shroud 182 and the valve disc 128 are threadably connected, the control element 127 can be arranged in essentially an infinite number of configurations.

FIG. 5A depicts the control element 127 in a first configuration where the end surface 192 of the shroud 182 is generally aligned with the sealing surface 188 of the valve disc 128. This configuration of the control element 127 can provide a small amount of "boost" due to the increased diameter of the control element 127, but it does not define a cavity between the shroud 182 and the valve disc 128 for directing flow.

In contrast, FIG. 5B depicts the control element 127 in a second configuration where the end surface 192 of the shroud 182 extends a first distance beyond the sealing surface 188 of the valve disc 128. So configured, the control element 127 defines the cylindrical cavity 127a. which is defined between the sealing surface 188 of the valve disc 128 and the inner surface 194 of the shroud 182. Similarly, FIG. 5C depicts the control element 127 in a third configuration where the end surface 192 of the shroud 182 extends a second distance beyond the sealing surface 188 of the valve disc 128. The second distance is greater than the first distance, and therefore, the configuration illustrated in FIG. 5C defines a cavity 127a that is dimensioned greater than the cavity 127a in FIG. 5B.

Referring back to FIG. 3, during normal operation and with control element 127 configured as depicted in either of FIG. 5B or FIG. 5C, fluid flowing from the valve port 136 flows at least partly into the cavity 127a defined by the control element 127. As the fluid deflects off of the sealing surface 188, the fluid exits the cavity 127a and tends to be directed to the outlet 108 of the valve body 104. The inner chamfered surface 196 of the shroud 182, which is identified in FIG. 4, assists the shroud 182 in capturing and releasing the fluid. Therefore, the portion of the shroud 182 that extends beyond the sealing surface 188 of the valve disc 128 directs the flow of the fluid toward the outlet 108 of the valve body 104, while simultaneously directing the same fluid away from the actuator 102 to provide a "boost" to the pressure sensed by the diaphragm 124.

As mentioned above, the shroud 182 is adjustably positioned relative to the valve disc 128 such that the amount of "boost" can be tuned. For example, the embodiment of the shroud 182 depicted in FIG. 5C is such that its end surface 192 is located further away from the sealing surface 188 of the sealing disc 128 than the embodiment illustrated in FIG. 5B. Therefore, the third configuration, which is depicted in FIG. 5C, defines a larger cavity 128a and provides a greater amount of "boost" than the second configuration, which is depicted in FIG. 5B. The control element 127 thus interacts with the flow of gas through the regulator valve 104 differently in each of these different configurations.

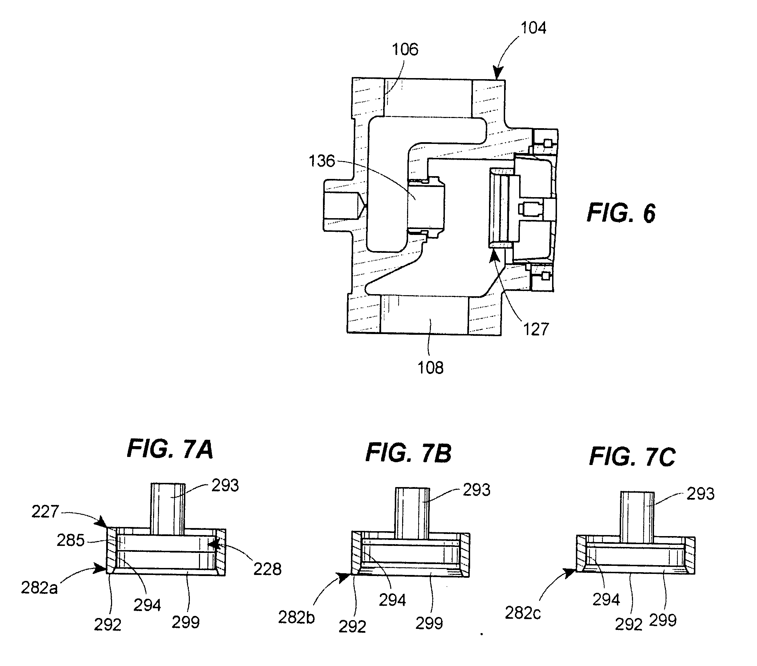

In the event that a failure in the system occurs, the control element 127 of the disclosed embodiment does not affect the relief function of the regulator 100. Rather, as depicted in FIG. 6, in a second or failure operating mode, the control element 127 moves into a full open position to provide pressure relief to the regulator 100. Accordingly, this moves the piston 132 and sealing cup 138 into an extreme downward position. So configured, the control member 127 minimizes its restriction with the flow emerging from the valve port 136 and allows it to flow toward the outlet 108 of the regulator valve 104, as well as into the actuator 102 to provide pressure relief at the outlet 108 of the regulator valve 104 as predetermined by the configuration of the relief valve 142. For example, once the pressure in the control cavity 118 rises above a relief pressure, which is set by the relief spring 140, the pressure will force the diaphragm 124 and combination spring seat 164 upward, thereby compressing the relief spring 140 against the relief spring seat 166. This, in turn, disengages the diaphragm 124 from the sealing cup 138 of the piston 132 and allows gas to flow through the openings 144, 170 and into the relief cavity 134 above the diaphragm 124. As the relief cavity 134 fills with gas, its pressure increases.

Upon the pressure in the relief cavity 134 rising above a predetermined release pressure, the release valve 142 opens and exhausts gas through the exhaust port 156 to the atmosphere in a manner similar to that which is described above with reference to the conventional regulator 10 depicted in FIG. 1. Specifically, the release valve 142 includes a valve plug 146 and a release spring 154. As depicted in FIG. 2, the release valve 142 is contained within the upper housing component 116a of the housing 116 adjacent to the exhaust port 156. More particularly, the exhaust port 156 includes an L-shaped cavity comprising a vertical portion 156a and a horizontal portion 156b. The vertical portion 156a is in fluid communication with the relief cavity 134. The horizontal portion 156b is open to the atmosphere. The vertical portion 156a contains the release valve 142 and defines a seating surface 198. The release spring 154 therefore biases the valve plug 146 into a closed position against the seating surface 198 of the exhaust port 156.

FIGS. 7A-7C depict an alternative embodiment of a control element 227 constructed in accordance with the principles of the present invention. The control element 227 includes a valve disc 228 and a plurality of shrouds 282a, 282b, 282c. The valve disc 228 is similar to the valve disc 128 described above with reference to FIGS. 3-6. The valve disc 228 includes a generally cylindrical body 285 and a collar 293. The body 285 includes a sealing surface 288 and an outer surface 290. The collar 293 is adapted to be snap-fit onto a stem of a control assembly; similar to the nose 178a of the stem 178 described above with reference to FIGS. 2 and 3.

The plurality of shrouds 282a, 282b, 282c are adapted to be interchangeably disposed on the body 285 of the valve disc 228. Thus, a technician may replace one shroud 282a, for example, with another shroud 282b, for example, to tune the control element 227 to achieve a particular flow characteristic for a particular application in a manner similar to tuning the control element 127 by adjusting the single shroud 182 described above.

For example, each of the plurality of shrouds 282a, 282b, 282c have different axial dimensions. Therefore, the impact of the control element 227 on the flow through the regulator valve 104 and therefore the outlet pressure depends on which shroud 282a, 282b, 282c is utilized. Otherwise, the shrouds 282a, 282b, 282c are identical. Specifically, each shroud 282a, 282b, 282c includes a generally cylindrical member, which can also be referred to as a collar or body, having an end surface 292 and an inner surface 294 including an inner chamfered surface 299. In one embodiment, the inner surface 294 of the shrouds 282a, 282b, 282c may be removably attached to the body 285 of the control disc 228 via a plurality of threads, a knurled connection, a set screw, or any other fixation device, or combination of fixation devices. Accordingly, because each of the shrouds 282a, 282b, 282c have different axial dimensions, they each extend a different distance beyond the sealing surface 288 of the valve disc 228, and therefore, provide different impacts on the flow and pressure of gas through the regulator valve 104 during normal operation.

Based on the foregoing, a regulator and/or a control element constructed in accordance with the present invention advantageously compensates for, reduces, and/or prevents "droop" from occurring by directing the flow of gas through the valve port 136 toward the outlet 108 of the regulator valve 104 and away from the actuator 102 without adversely affecting the performance of pressure relief within the regulator 100. Moreover, the adjustable and/or interchangeable control elements 127, 227 of the present invention advantageously provide for the ability to tune the regulator 100 for a variety of specific applications. While various embodiments of the regulator and control elements have been described herein, the present invention is not intended to be limited to these embodiments, but rather, is intended to include that which is defined by the scope and spirit of the following claims.

For example, one alternative embodiment of a control element constructed in accordance with the principles of the present invention may include a generally cup-shaped valve disc member and a plurality of inserts. The cup-shaped valve disc member may define a cavity and the inserts may have varying thicknesses, for example. The inserts therefore may be interchangeably disposed within the cavity of the valve disc to define different depths of the cavity, thereby providing for different impacts on the flow through the regulator valve 104. In one embodiment, the inserts may be magnetized inserts, threaded inserts, or merely friction-fit inserts. In another embodiment, the inserts may be stacked within the cavity to define different depths.

Moreover, the regulator 100 described herein is merely one example of a fluid control device incorporating the principles of the present invention. Other fluid control devices such as control valves may also benefit from the structures and/or advantages of the present invention.

## Claims

1. A fluid regulating device comprising:
a valve body (104) defining an inlet (106) and an outlet (108) ;
a valve port (136) carried by the valve body between the inlet and the outlet;
a valve disc (128) slidably disposed within the valve body and adapted for displacement between an open position and a closed position to control the flow of a fluid through the valve body, the valve disc having a sealing surface (188) for engaging the valve port when the valve disc is in the closed position; **characterised by**
a cylindrical member (182) removably coupled to the periphery of the valve disc and extending beyond the sealing surface of the valve disc, thereby defining a cavity (127a) for directing fluid flowing from the valve port toward the outlet.

2. The device of claim 1, wherein the cylindrical member is adapted for axial displacement between a first position and a second position relative to the valve disc.

3. The device of claim 2, wherein at least one of the cylindrical member and the valve disc comprises indicia for indicating the position of the cylindrical member relative to the valve disc.

4. The device of claim 2, wherein the cylindrical member is in threaded engagement with an outer cylindrical surface of the valve disc.

5. The device of claim 1, further comprising a first cylindrical member and a second cylindrical member, each of the first and second cylindrical members adapted to be interchangeably disposed on the valve disc.

6. The device of claim 5, wherein the first cylindrical member is adapted to extend a first distance beyond the sealing surface and the second cylindrical member adapted to extend a second distance beyond the sealing surface, and wherein the second distance is different than the first distance.

7. The device of claim 1, further comprising a diaphragm operably connected to the valve disc, the diaphragm adapted to displace the valve disc between the open and closed positions in response to a pressure at the outlet of the valve body.

## Patentansprüche

1. Fluidregelungsvorrichtung, Folgendes aufweisend:
einen Ventilkörper (104), der einen Einlass (106) und einen Auslass (108) definiert;
eine Ventilöffnung (136), die vom Ventilkörper zwischen dem Einlass und dem Auslass getragen ist;
einen Ventilteller (128), der gleitbeweglich im Ventilkörper angeordnet und für eine Verlagerung zwischen einer offenen Position und einer geschlossenen Position ausgelegt ist, um den Strom eines Fluids durch den Ventilkörper zu steuern, wobei der Ventilteller eine Dichtungsfläche (188) hat, um an der Ventilöffnung anzugreifen, wenn sich der Ventilteller in der geschlossenen Position befindet;
**gekennzeichnet durch**
ein zylindrisches Teil (182), das abnehmbar an den Umfang des Ventiltellers angeschlossen ist und sich über die Dichtungsfläche des Ventiltellers hinaus erstreckt, wodurch ein Hohlraum (127a) gebildet wird, um Fluid, das aus der Ventilöffnung strömt, zum Auslass zu leiten.

2. Vorrichtung nach Anspruch 1, wobei das zylindrische Teil für eine axiale Verlagerung zwischen einer ersten Position und einer zweiten Position in Bezug auf den Ventilteller ausgelegt ist.

3. Vorrichtung nach Anspruch 2, wobei das zylindrische Teil und/oder der Ventilteller Markierungen umfasst, um die Position des zylindrischen Teils in Bezug auf den Ventilteller anzuzeigen.

4. Vorrichtung nach Anspruch 2, wobei das zylindrische Teil in Gewindeeingriff mit einer äußeren zylindrischen Fläche des Ventiltellers steht.

5. Vorrichtung nach Anspruch 1, darüber hinaus ein erstes zylindrisches Teil und ein zweites zylindrisches Teil aufweisend, wobei das erste und zweite zylindrische Teil jeweils dazu ausgelegt sind, gegeneinander auswechselbar am Ventilteller angeordnet zu sein.

6. Vorrichtung nach Anspruch 5, wobei das erste zylindrische Teil dazu ausgelegt ist, sich um einen ersten Abstand über die Dichtungsfläche hinaus zu erstrecken, und das zweite zylindrische Teil dazu ausgelegt ist, sich um einen zweiten Abstand über die Dichtungsfläche hinaus zu erstrecken, und wobei der zweite Abstand anders ist als der erste Abstand.

7. Vorrichtung nach Anspruch 1, darüber hinaus eine Membran aufweisend, die in Wirkverbindung mit dem Ventilteller steht, wobei die Membran dazu ausgelegt ist, den Ventilteller im Ansprechen auf einen Druck am Auslass des Ventilkörpers zwischen der offenen und geschlossenen Position zu verlagern.

## Revendications

1. Dispositif de régulation de fluide comprenant :
un corps de soupape (104) définissant une admission (106) et un refoulement (108) ;
une lumière de soupape (136) portée par le corps de soupape entre l'admission et le refoulement ;
un disque de soupape (128) disposé avec faculté de coulissement dans le corps de soupape et adapté pour un déplacement entre une position ouverte et une position fermée afin de commander l'écoulement d'un fluide à travers le corps de soupape, le disque de soupape comportant une surface d'étanchéité (188) pour mettre en prise la lumière de soupape lorsque le disque de soupape se trouve dans la position fermée ; **caractérisé par**
un organe cylindrique (182) couplé de façon amovible à la périphérie du disque de soupape et s'étendant au-delà de la surface d'étanchéité du disque de soupape, définissant ainsi une cavité (127a) pour diriger un fluide s'écoulant depuis la lumière de soupape vers le refoulement.

2. Dispositif selon la revendication 1, dans lequel l'organe cylindrique est adapté pour un déplacement axial entre une première position et une seconde position par rapport au disque de soupape.

3. Dispositif selon la revendication 2, dans lequel au moins l'un de l'organe cylindrique et du disque de soupape comprend des indices pour indiquer la position de l'organe cylindrique par rapport au disque de soupape.

4. Dispositif selon la revendication 2, dans lequel l'organe cylindrique se trouve en prise filetée avec une surface cylindrique externe du disque de soupape.

5. Dispositif selon la revendication 1, comprenant en outre un premier organe cylindrique et un second organe cylindrique, chacun des premier et second organes cylindriques étant adapté pour être disposé de manière interchangeable sur le disque de soupape.

6. Dispositif selon la revendication 5, dans lequel le premier organe cylindrique est adapté pour s'étendre sur une première distance au-delà de la surface d'étanchéité et le second organe cylindrique est adapté pour s'étendre sur une seconde distance au-delà de la surface d'étanchéité, et dans lequel la seconde distance est différente de la première distance.

7. Dispositif selon la revendication 1, comprenant en outre un diaphragme raccordé fonctionnellement au disque de soupape, le diaphragme étant adapté pour déplacer le disque de soupape entre les positions ouverte et fermée en réponse à une pression au niveau du refoulement du corps de soupape.
